# EUROPÄISCHE PATENTSCHRIFT

(11) **EP 1 284 478 B1**
(45) Veröffentlichungstag und Bekanntmachung des Hinweises auf die Patenterteilung: **03.01.2007**
(21) Anmeldenummer: 01810771.4
(22) Anmeldetag: 15.08.2001
(51) Int. Cl.: G09F 19/22, G09F 13/18, G09F 15/00

(54) **Vorrichtung mit einem Beleuchtungsmittel zum Beleuchten eines Schildes**
System including illumination means for lighting a sign plate
Appareil avec dispositifs d'illumination pour l'éclairage d'un panneau de signalisation

(43) Veröffentlichungstag der Anmeldung: 19.02.2003
(73) Patentinhaber: Rutishauser Produktion AG, 3073 Gümligen (CH)
(72) Erfinder: Althaus, Peter, 6300 Zug (CH)
(74) Vertreter: Roshardt, Werner Alfred

(56) Entgegenhaltungen:
- WO-A-01/18776
- US-A- 6 131 321
- PATENT ABSTRACTS OF JAPAN vol. 1998, no. 02, 30. Januar 1998 (1998-01-30) & JP 09 258678 A (IDEC IZUMI CORP), 3. Oktober 1997 (1997-10-03)
- PATENT ABSTRACTS OF JAPAN vol. 2000, no. 10, 17. November 2000 (2000-11-17) & JP 2000 206911 A (SEKISUI JUSHI CO LTD), 28. Juli 2000 (2000-07-28)
- PATENT ABSTRACTS OF JAPAN vol. 2000, no. 21, 3. August 2001 (2001-08-03) & JP 2001 092394 A (MATSUSHITA ELECTRIC WORKS LTD;OTANI NATIONAL DENKI KK), 6. April 2001 (2001-04-06)

## Beschreibung

Die Erfindung betrifft eine Vorrichtung mit einem Beleuchtungsmittel zum Beleuchten eines Schildes, wobei das Beleuchtungsmittel Teil einer am bestehenden Schild dauerhaft befestigbaren Baueinheit ist.

Viele Unfälle auf Strassen, insbesondere solche mit Beteiligung von Fussgängern, geschehen während der Dämmerung, nachts oder bei widrigen Wetterbedingungen. Die Unfälle sind massgeblich dadurch mitverursacht, dass ein motorisierter Verkehrsteilnehmer die Gefahr, z. B. eine Person im Fahrbahnbereich, wegen schlechter Lichtverhältnisse zu spät wahrnimmt und nicht mehr genügend Zeit zur Verfügung hat, ein Brems- oder Ausweichmanöver einzuleiten. Besonders ausserhalb von Ortschaften sind Strassen oft unbeleuchtet, deshalb ist die Gefahr von solchen Unfällen dort besonders gross. Aber auch innerhalb von bebauten Gebieten können sich - sogar auf beleuchteter Strasse - durch Schattenwurf von Gebäuden und durch abrupte Licht-/Schattenübergänge gefährliche Stellen ergeben.

Aus diesen Gründen werden markierte Fussgängerüberwege, sog. Fussgängerstreifen, bei schlechten Lichtverhältnissen durch beleuchtete Schilder markiert, so dass sie Fussgänger finden können und Strassenbenutzer gewarnt werden. Ausserdem wird oft auch der Bereich des Fussgängerstreifens ausgeleuchtet, damit die motorisierten Verkehrsteilnehmer erkennen können, wenn eine Person die Strasse überquert. Eine übliche Lösung besteht darin, dass ein Schild aufgestellt wird, welches als Kasten aufgebaut ist, in dessen Innern eine vom Netz gespeiste Lichtquelle (oft Fluoreszenzlampe) zwei Seitenflächen des Kastens durchleuchtet, welche als lichtdurchlässige Schilder ausgestaltet sind, während eine weitere vom Netz gespeiste Lichtquelle (oft ähnlich einer üblichen Strassenbeleuchtungsvorrichtung) den Strassenbereich mit dem Fussgängerstreifen ausleuchtet.

Ein grosser Nachteil dieser Lösung besteht darin, dass - gerade an abgelegenen Stellen, z. B. ausserhalb von Ortschaften - die Installation einer Stromzuführung sehr aufwändig und deshalb teuer ist, weshalb oft die Platzierung einer beleuchteten Tafel und einer Beleuchtung des Fussgängerübergangs unterbleibt.

Auch andere Strassenschilder werden aufgrund der hohen Kosten einer Stromzuführung vom Netz abseits von Ortschaften meist nicht beleuchtet. Gerade Schilder wie Warnung vor Wildwechseln, Schleudergefahr oder Kurven sind aber während der Dämmerung, nachts oder bei schlechten Lichtverhältnissen besonders wichtig.

Es sind nun (in anderem Zusammenhang) Anzeigeeinheiten bekannt, bei welchen das eigentliche Schild (d. h. das zu beleuchtende Objekt) und die Lichtquelle als Einheit aufgebaut sind und welche eine netzunabhängige Stromversorgung beinhalten:

Die JP 09258678 (Idec Izumi) zeigt beispielsweise eine beleuchtete Anzeigeeinheit mit einer netzunabhängigen Stromversorgung. Die Anzeigeeinheit umfasst zwei parallele Acrylplatten, welche die anzuzeigende Information aufweisen, eine Solarbatterie, welche zwischen den Acrylplatten angeordnet ist. sowie einen Leuchtbalken mit einer Reihe von LED-Leuchten. Die LED-Leuchten werden von einem Lichtsensor gesteuert und durch die Solarbatterie mit Strom versorgt.

Die JP 2000206911 (Sekishui Jushi) zeigt ein innenbeleuchtetes Anzeigesystem mit einem Lichtquellenabschnitt mit einer Lichtquelle und einem anschliessenden Lichtübertragungsabschnitt mit einer Lichtleiterplatte.

Ein Nachteil besteht bei üblichen Lösungen auch darin, dass die Aussenwände des Kastens aus einem Material (Glas) bestehen, welches mit recht einfachen Mitteln (z. B. Steinwurf) durch Vandalen beschädigt werden kann. Weiterhin muss bei der beschriebenen herkömmlichen Lösung darauf geachtet werden, dass sich die beleuchteten Schilder ausserhalb der Reichweite von Menschen befinden, da sich ihre Aussenwände durch die verwendeten Leuchten derartig stark erwärmen, dass bei Berührung Verbrennungen möglich sind.

Weil diese Lösungen als Anzeigeeinheiten ausgebildet sind, muss beim Bereitstellen eines beleuchteten Schildes zudem auch das eigentliche Schild ersetzt werden. Ein Nachrüsten des bestehenden Schildes ist nicht möglich.

Die US 6,131,321 (Daigle) offenbart ein Beleuchtungssystem, welches durch Solarzellen gespeist wird und insbesondere für die Beleuchtung von Strassen- und Adressschildern geeignet ist. Das System enthält einen, vorzugsweise kugelförmigen, Behälter zur Anbringung an einem Lampenständer mit Solarzellen, einem Akkumulator und einem Lichtsensor zur Steuerung der Beleuchtung sowie eine gesonderte Leuchte, welche an der Schildfläche angebracht wird. Das System kann an Strassen- und Adressschilder angepasst werden.

Die Anbringung dieses Systems an einem bestehenden Schild ist allerdings aufwändig. Die an der Schildfläche angebrachte Leuchte kann zudem das Schild teilweise verdecken und erschwert einen Austausch des Schildes.

### Darstellung der Erfindung

Aufgabe der Erfindung ist es, eine Beleuchtungsvorrichtung zu schaffen, welche sich einfach und stabil an einem vorhandenen Schild befestigen lässt und welche die Informationsfunktion und die Wartung des Schildes nicht beeinträchtigt.

Die Lösung der Aufgabe ist durch die Merkmale des Anspruchs 1 definiert. Die das Beleuchtungsmittel enthaltende Baueinheit umfasst auch eine netzunabhängige Stromversorgung, und die Vorrichtung umfasst Mittel zur Befestigung der Baueinheit an einem das zu beleuchtende Schild umgebenden Rahmen.

Ein wichtiger Vorteil der Erfindung besteht in der einfachen Montage. Dank der Netzunabhängigkeit entfällt die Installation einer Stromzuführung und damit ein grosser Teil des Aufwands bei herkömmlichen Lösungen. Durch die Befestigung an bestehenden Schildern ist auch die Verankerung im Boden (oder anderswo) sowie die Absetzung auf eine gewünschte Höhe bereits gewährleistet und braucht nicht ein weiteres Mal ausgeführt zu werden. Weiter erlaubt der Aufbau der Vorrichtung als Baueinheit eine einfache Montage an üblichen bestehenden Schildern, welche auch von ungeübten Kräften mit einem Minimum an Werkzeug ausgeführt werden kann. Verkehrsschilder, bei welchen das eigentliche Schild an einem es vollständig umgebenden Rahmen, z. B. aus Stahlrohren, befestigt ist, sind üblich. Die erfindungsgemässe Beleuchtungsvorrichtung ist nun so beschaffen, dass sie direkt am stabilen Rahmen befestigt werden kann. Dies erlaubt insbesondere ein durch die Beleuchtungsvorrichtung nicht behindertes Auswechseln des Schildes und vermeidet, dass Teile am Rand des Schildes durch Befestigungselemente der Beleuchtungsvorrichtung verdeckt werden, insbesondere bei zweiseitigen Schildern.

Zweckmässigerweise wird die Erfindung so ausgeführt, dass die Beleuchtungsvorrichtung selbstreinigend ist, d.h., dass angelagerter Schmutz durch natürlicherweise fallenden Regen jeweils wieder entfernt wird. Dazu wird einerseits die Form des Gehäuses so ausgeführt, dass sich keine Verwinkelungen und Mulden ergeben, in welchem sich Wasser und Schmutz sammeln könnten. Andererseits kann das Gehäuse auf seiner Aussenseite mit einer Antihaft-Beschichtung versehen werden, damit sich Schmutz gar nicht erst anlagern kann.

Die Erfindung ist nicht auf die Verwendung zur Beleuchtung von Verkehrsschildern beschränkt. Sie eignet sich insbesondere für ausserhalb von Ortschaften befindliche Hinweis- und Werbeschilder, welche abends oder in der Nacht erkennbar sein sollten, also z.B. für Einrichtungen, welche zu diesen Tageszeiten besucht werden (Gaststätten, Diskotheken, Nachtclubs u.s.w.)

Nach Möglichkeit ist die netzunabhängige Stromversorgung in die Baueinheit, welche am Schild befestigt wird, integriert. Dadurch sind keine weiteren Befestigungselemente für die Stromversorgung nötig und eine externe Kabelverbindung von der Stromversorgung zur Baueinheit erübrigt sich.

Die Beleuchtungsvorrichtung wird mit Vorteil durch Solarzellen mit Energie versorgt. Während der hellen Tageszeit wird Sonnenenergie, gesteuert durch eine in die Steuerungselektronik integrierte Ladeautomatik, aufgenommen und in Akkumulatoren gespeichert. In der dunklen Zeit zwischen Abend- und Morgendämmerung, sowie gegebenenfalls bei schlechter Witterung, z.B. während Gewittern, wird die gespeicherte Energie durch die vorhandenen Leuchten wieder abgegeben. Diese Lösung zeichnet sich verglichen mit Batterien, Akkumulatoren oder Brennstoffzellen, welche periodisch ausgewechselt oder betankt werden müssen, dadurch aus, dass sie ohne Wartung eine lange Betriebszeit (bis zu einigen Jahren) erlaubt. Gegenüber Lösungen wie z. B. Windgeneratoren hat sie den Vorteil, dass Sonnenlicht in regelmässigen, vorhersagbaren Zeiträumen zur Verfügung steht.

Damit sich die Beleuchtungsvorrichtung ohne vorherige Anpassung an allen Standorten montieren lässt, ist es von Vorteil, wenn die Solarzellen verstellbar angeordnet sind, so dass sie sich so ausrichten lassen, dass ein Maximum an Sonnenlicht in elektrische Energie umgewandelt werden kann. In der Regel wird man ein übliches flaches, rechteckiges Solarpanel so anordnen, dass es um eine Achse geneigt werden kann, welche einer Breit- oder Längsseite des Panels entspricht. Alternativ dazu kann auch ein Kugelgelenk vorgesehen werden, welches im Zentrum des Panels angebracht wird und eine optimale Ausrichtung unabhängig von der Aufstellung des bestehenden Schildes erlaubt. Mechanisch bewegliche Teile wie Drehachsen, Scharniere oder Kugelgelenke sind allerdings anfällig auf Materialermüdung, Korrosion und Zerstörung durch Vandalismus. Es kann also vorteilhaft sein, auf solche Elemente zu verzichten und stattdessen entweder verschiedene Ausführungen der Beleuchtungsvorrichtung mit verschieden angebrachten Solarzellen oder aber - vorzugsweise - eine Beleuchtungsvorrichtung mit konvex gebogenen Solarzellen vorzusehen, welche aus einem grossen Raumwinkel einfallendes Sonnenlicht verwerten können.

Die Beleuchtung des Schildes geschieht mit Vorteil durch LED-Leuchten, welche sich durch einen niedrigen Energieverbrauch und geringe Wärmeleistung auszeichnen. Dies erlaubt eine lange Betriebszeit mit einer gegebenen Energiemenge, ausserdem wird die Gefahr von Verbrennungen durch Berührung des beleuchteten Schildes und der Beleuchtungsvorrichtung vermieden. Natürlich können auch andere Leuchtmittel, z. B. stromsparende Fluoreszenzleuchten, eingesetzt werden. Die Leuchtmittel sind mit Vorteil balkenförmig und parallel zu einer Seite des Schildes (bzw. tangential bei einem runden Schild) angebracht, wobei ihre Länge der Seitenlänge des Schildes (bzw. seinem Durchmesser) entspricht. Die Leuchtmittel befinden sich vorzugsweise etwas von der Schildebene abgesetzt, so dass durch ein leichtes Einwärtsneigen ihres Lichtkegels das Schild gleichmässig beleuchtet werden kann, ohne dass es zur Blendung von Verkehrsteilnehmern kommt.

Eine weitere Möglichkeit zur Beleuchtung ist das Aufbringen einer LED-Folie auf das zu beleuchtende Schild. In diese wird von einem Seitenrand mittels Dioden weisses Licht eingebracht, dieses wird durch die Folie verteilt, trifft auf das darunter befindliche Schild und wird durch die transparente Folie hindurch abgestrahlt. So erreicht man eine gleichmässige Ausleuchtung und vermeidet Irritationen durch Blendwirkung.

Eine L-förmige Ausführung der erfindungsgemässen Vorrichtung mit einem horizontalen und einem vertikalen Schenkel bietet den Vorteil, dass eine stabile Befestigung z. B. an je einem Befestigungspunkt pro Schenkel bei den meisten gebräuchlichen Schildformen - z.B. rund, rechteckig oder achteckig - einfach zu realisieren ist. Hat das zu beleuchtende Schild oder eine es umgebende Umrahmung eine rechteckige (oder achteckige) Form, wird eine L-förmige Baueinheit vorzugsweise so befestigt, dass der horizontale Schenkel auf die Oberseite des Signals bzw. des Rahmens zu liegen kommt, so dass das Gewicht der Vorrichtung vom Schild getragen wird, und dass eine Befestigung des vertikalen Schenkels die Lage der Vorrichtung fixiert. Weiterhin bietet eine L-förmige Bauweise in den beiden Schenkeln mehr Platz zur Aufnahme von Akkumulatoren und dadurch eine grössere Betriebsdauer.

Die Beleuchtungsvorrichtung soll ihre Wirkung bei schlechten Lichtverhältnissen, insbesondere nachts, entfalten. Eine Anpassung an Witterungsverhältnisse und Jahreszeiten erreicht man vorzugsweise durch Einsatz eines oder mehrerer Lichtsensoren. Diese sorgen dafür, dass die Steuerungselektronik die Vorrichtung bei Unterschreitung einer (einstellbaren) auf sie auftreffenden Lichtintensität einschaltet und bei Überschreitung einer (ebenfalls einstellbaren) Lichtintensität wieder ausschaltet, um die Energiereserven zu schonen. Um zu häufige Ein-/Ausschaltvorgänge zu vermeiden, wird entweder die Ausschalt-Intensität geringfügig höher gewählt als die Einschalt-Intensität (Hysterese), oder das Ausschalten geschieht nach einem gewissen Zeitversatz nach Überschreitung der entsprechenden Lichtintensität. Zusätzlich kann durch die Lichtsensoren auch die Lichtleistung der Beleuchtungsmittel gesteuert werden: Nachts genügt eine kleine Lichtleistung, um das Schild aus grosser Distanz sichtbar zu machen, dies beugt auch Blendwirkung vor. Während der Dämmerung oder bei Gegenlicht hingegen, ist eine grosse Lichtleistung nötig, damit das Signal seine Warnwirkung behält.

Schilder entfalten ihre Wirkung, nämlich zu warnen oder zu informieren, nur dann, wenn sie sich in der Sichtweite von Personen befinden. Es ist deshalb von Vorteil, die Beleuchtung nur dann einzuschalten, wenn durch Annäherungssensoren festgestellt wird, dass sich Personen (Fussgänger, in Autos etc.) im entsprechenden Bereich befinden. Dies hat zur Folge, dass der Energieverbrauch niedrig gehalten wird. Bei einem Schild, welches z. B. auf einen Fussgängerübergang aufmerksam macht, ist ausserdem die Warnwirkung auf motorisierte Verkehrsteilnehmer grösser. Dann nämlich, wenn der Annäherungssensor lediglich auf Fussgänger reagiert und den Strassenbenutzern bekannt ist, dass sich die Beleuchtung nur in Anwesenheit von Fussgängern einschaltet. Weiter kann z. B. eine Tafel, welche auf Wildwechsel aufmerksam machen soll, nur dann beleuchtet werden, wenn Wildtiere, welche sich der Strasse nähern, durch entsprechend gerichtete Annäherungssensoren die Vorrichtung einschalten.

Es ist nützlich, bei Fussgängerübergängen neben dem Schild, welches Autofahrer zur Vorsicht mahnt und Fussgänger auf den Übergang aufmerksam macht, auch den Übergang selbst zu beleuchten, vor allem dazu, dass Fussgänger, welche die Strasse überqueren, wahrgenommen werden können. Eine erfindungsgemässe Beleuchtungsvorrichtung kann deshalb neben der eigentlichen Beleuchtung des Schildes auch eine Lichtquelle enthalten, welche gezielt Teile der Umgebung, insbesondere den Fussgängerübergang, beleuchtet. Weitere Anwendungen einer zusätzlichen Umgebungsbeleuchtung können z. B. darin liegen, Wild vom Überqueren einer Strasse abzuhalten, wenn sich Verkehrsteilnehmer nähem. Damit die Umgebungsbeleuchtung an die aktuelle Situation angepasst werden kann, z. B. an die Breite der Strasse oder an den Abstand des Schildes mit der installierten erfindungsgemässen Vorrichtung vom Strassenrand, können der Öffnungswinkel der Umgebungslichtquelle sowie die bevorzugte Richtung ihres Lichtkegels einstellbar ausgebildet sein.

Wie für die Beleuchtung des Schildes gilt auch für die Umgebungsbeleuchtung, dass LED-Lichtquellen, in diesem Fall LED-Scheinwerfer (LED-Spots) zu einer optimalen Energieausbeute beitragen und die Wärmeentwicklung minimieren.

Ebenfalls für eine lange Beleuchtungsdauer bei gegebener Energie sorgt eine Steuerung der Umgebungsbeleuchtung durch Lichtsensoren, welche die Beleuchtung der Umgebung nur während schlechter Lichtverhältnisse einschaltet. Auch bei der Umgebungsbeleuchtung kann es angezeigt sein, die Lichtintensität der Leuchte den Gegebenheiten anzupassen, also z. B. in der Nacht zu reduzieren und in der Dämmerung und besonders bei Gegenlicht zu erhöhen.

Annäherungssensoren können dazu dienen, die Umgebungsbeleuchtung nur dann einzuschalten, wenn sie benötigt wird, was den Energieverbrauch weiter minimiert. Bei der Beleuchtung von Fussgängerübergängen z. B. ist eine Beleuchtung nur dann nötig, wenn sich Personen im Bereich des Übergangs befinden. Weiter hat eine selektive Beleuchtung den Vorteil, dass die Verkehrsteilnehmer auf der Strasse nur im Bedarfsfall zu besonderer Vorsicht gemahnt werden. Einem Gewöhnungseffekt durch eine Vielzahl von Warnhinweisen wird vorgebeugt und eine Beeinträchtigung des Nachtsehens durch Blendeffekte wird möglichst verhindert. Eine Zeitschaltung kann dafür sorgen, dass einige Zeit, nachdem keine Person mehr im Bereich des Fussgängerübergangs festgestellt wird, so dass damit gerechnet werden kann, dass sich niemand mehr im Gefahrenbereich befindet, die Umgebungsbeleuchtung wieder ausgeschaltet wird.

Aus der nachfolgenden Detailbeschreibung und der Gesamtheit der Patentansprüche ergeben sich weitere vorteilhafte Ausführungsformen und Merkmalskombinationen der findung.

### Kurze Beschreibung der Zeichnungen

Die zur Erläuterung des Ausführungsbeispiels verwendeten Zeichnungen zeigen:
- Fig. 1: Ein erfindungsgemässes Beleuchtungsmodul und seine Montage an einem Rahmen zur Aufnahme eines Schildes;
- Fig. 2: den Aufbau des erfindungsgemässen, am Rahmen angebrachten Beleuchtungsmoduls mit geöffnetem Horizontalschenkel;
- Fig. 3: den Querschnitt eines Aluminium-Halbprofils, aus welchem das Beleuchtungsmodul hauptsächlich aufgebaut ist.

Grundsätzlich sind in den Figuren gleiche Teile mit gleichen Bezugszeichen versehen.

### Wege zur Ausführung der Erfindung

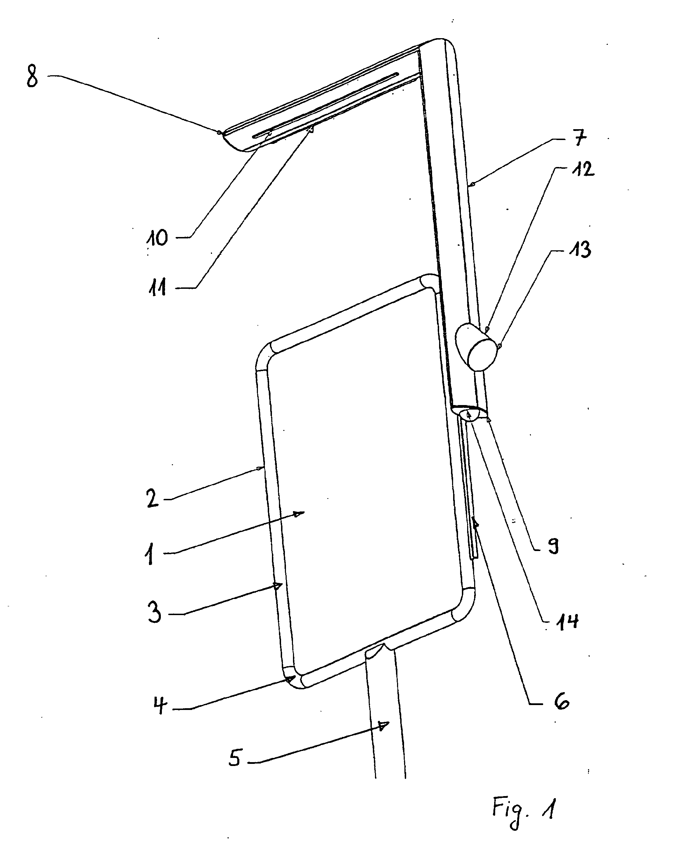

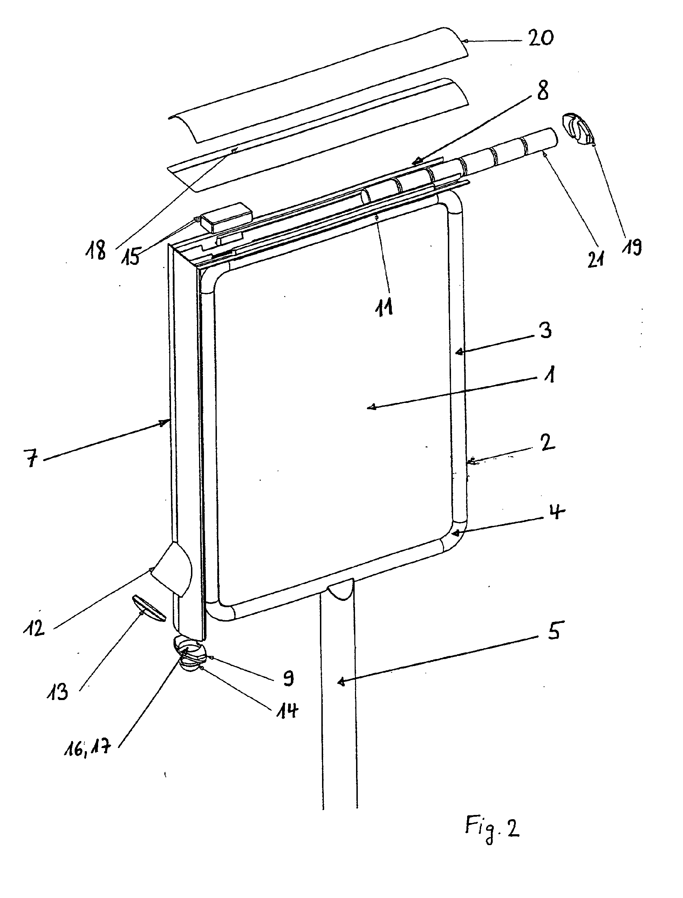

Fig. 1 und 2 zeigen eine erfindungsgemässe Vorrichtung zur Beleuchtung eines bestehenden rechteckigen Schildes 1, welches von einem Rohrrahmen 2 umgeben ist. Dieser ist, entsprechend der Form des Schildes, rechteckig, wobei seine vertikale grösser als seine horizontale Ausdehnung ist. Er ist aufgebaut aus vier geraden Rahmenrohren 3, welche jeweils durch kurze, abgerundete Eckstücke 4 verbunden sind, welche als um 90° gekrümmte Rohre desselben Querschnitts ausgebildet sind. Der Rohrrahmen ist an seinem unteren Seitenrohr mittig mit einem Standrohr 5 von grösserem Querschnitt verschweisst, welches im Boden verankert ist und den Rohrrahmen mit dem Schild auf die gewünschte Höhe absetzt. Je nach Verwendungszweck kann ein einzelnes Schild 1 einseitig oder aber zwei Schilder beidseitig durch Nietverbindungen mit vier an den Eckstücken 4 innen in der Rahmenebene angeschweissten gelochten Befestigungskonsolen angebracht werden.

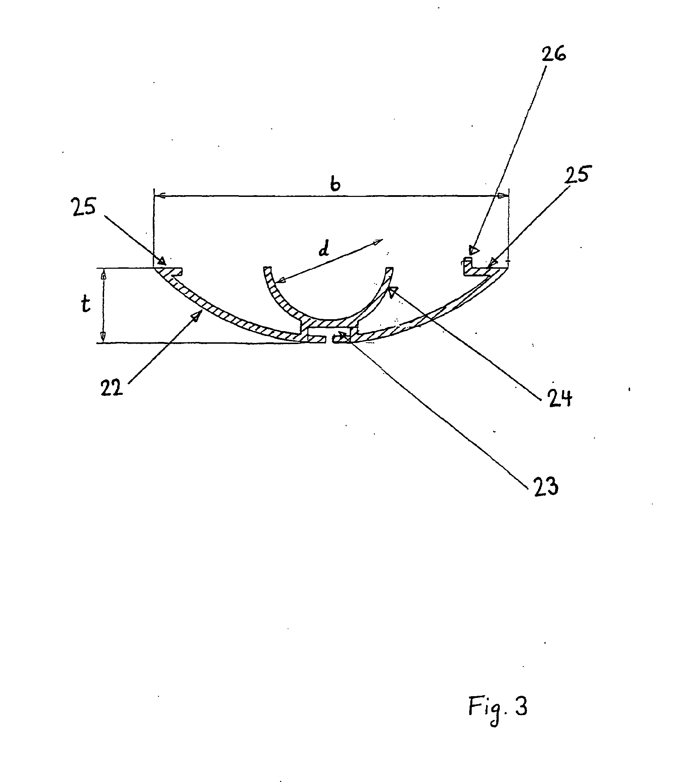

Die Vorrichtung zur Beleuchtung des Schildes ist aufgebaut aus Aluminium-Halbprofilen 18, deren Querschnitt in Fig. 3 dargestellt ist. Die Aussenseite des Profils ist konvex und gleichmässig gekrümmt, wobei die Breite *b* des Halbprofils ca. 5 Mal grösser ist als seine Tiefe *t*. Die konvexe Form vermindert Ablagerungen von Schmutz, Schnee oder Wasser und sorgt für die Selbstreinigung durch Regenwasser. Das Halbprofil trägt an der Aussenseite eine T-förmige Nut 23, welche durch eine schlitzförmige Öffnung längs der Mitte der Aussenseite des Profils sowie durch das Innenprofil 24 gebildet wird. Dieses hat einen halbkreisförmigen Querschnitt, so dass es die zylinderförmigen Akkumulatoren 21 aufnehmen kann. Der Innendurchmesser *d* des Innenprofils beträgt ca. 1/3 der Breite *b* des Aluminium-Halbprofils. Das Aussenprofil 22 trägt an seinen Enden jeweils profil-einwärts gerichtete Flachstücke 25, von denen eines an seinem inneren Ende mit einer Nase 26 versehen ist. Dies ermöglicht einen passgenauen Formschluss der beiden Halbprofile und damit eine wasser- und staubdichte Verbindung. Die vier Halbprofile sind jeweils an einem ihrer Enden so abgeschrägt, dass sie gemäss Fig. 2 zu einer L-förmigen Einheit verbunden werden können, welche aus einem vertikalen Schenkel 7 und einem horizontalen Schenkel 8 besteht.

Zur Befestigung der Einheit wird am Rohrrahmen 2 eine Schiene 6 befestigt. Dies kann durch Schrauben geschehen, welche in der Schiene versenkt angebracht sind und in vorgebohrte Löcher im Rahmenrohr 3 geschraubt sind, gegebenenfalls unter Verwendung von Hohlraumdübeln. Eine andere Möglichkeit ist die Verwendung einer Bandverbindung, z. B. von Rohrbriden, welche eine Befestigung ohne bleibende Einwirkung auf das Schild oder seinen Rahmen erlauben. Auf die am Rahmen befestigte Schiene 6 wird nun die Nut des vertikalen Schenkels 7 aufgeschoben. Das unbefugte Entfernen der Einheit durch Hochschieben wird durch eine weitere Verschraubung oder Bandverbindung des horizontalen Schenkels 8 mit dem oberen Rohr des Rohrrahmens erschwert.

Der horizontale Schenkel 8 nimmt die Steuerungselektronik 15 sowie Akkumulatorzellen 21, der vertikale Schenkel 7 weitere Akkumulatorzellen 21, Licht- und Annäherungssensoren 16, 17 sowie die Umgebungsbeleuchtung 12 auf. Die Schenkel werden an ihren äusseren Enden durch Abdeckungen 9, 19 wasser- und staubdicht abgeschlossen. Das in Fig. 1 und 2 dargestellte Ausführungsbeispiel ist geeignet zur Beleuchtung eines zweiseitigen Schilds oder zweier Schilder, welche beidseitig im Rohrrahmen angebracht sind. Der horizontale Schenkel 8 trägt also an seiner unteren Aussenseite zwei LED-Beleuchtungsbalken 10 und 11, welche die im Rohrrahmen beidseitig befestigten Schilder 1 von oben beleuchten. In den vertikalen Schenkel ist eine LED-Spotleuchte 12 eingebaut, welche Teile der Umgebung beleuchtet. Sie wird durch die Spotscheibe 13 vor Wasser, Staub oder Fremdeinwirkung geschützt. Die Beleuchtungsvorrichtung wird also in der Regel so angebracht, dass der vertikale Schenkel auf der der Strasse zugewandten Seite des Schildes zu liegen kommt. Der Lichtsensor 16 und der Annäherungssensor 17 treten durch eine Öffnung in der unteren Profilabdeckung 9 des vertikalen Schenkels hervor und sind durch eine Schutzscheibe 14 vor äusseren Einflüssen geschützt.

Die Energieaufnahme geschieht über Solarzellen 20, welche die gesamte Aussenseite des oberen Halbprofils des horizontalen Schenkels 8 abdecken. Ihre Form entspricht der konvex gebogenen Aussenseite des Aluminium-Halbprofils 18 und ermöglicht die Aufnahme von Sonnenlicht unabhängig von der Aufstellungsrichtung des Schildes 1. Die durch die Solarzellen 20 aufgenommene Energie wird, reguliert von der in der Steuerungselektronik 15 enthaltenen Ladeautomatik, in den Akkumulatorzellen 21 gespeichert. Diese zeichnen sich durch einen geringen Ladestrom aus, so dass sie auch bei geringer Sonneneinstrahlung aufgeladen werden können. Die Steuerungselektronik 15 schaltet, wenn die durch den Lichtsensor 16 detektierte Lichtintensität eine einstellbare untere Lichtintensität unterschreitet, die Schildbeleuchtung 10, 11 bzw. die Umgebungsbeleuchtung 9 ein und bei Überschreitung einer einstellbaren oberen Lichtintensität die Beleuchtungsmittel 10, 11, 12 wieder aus (wobei für Schild- und Umgebungsbeleuchtung verschiedene Unter- und Obergrenzen definiert werden können). Die vom Annäherungssensor 17 empfangenen Signale werden ebenfalls dazu verwendet, die Beleuchtungsmittel 10, 11, 12 der Vorrichtung ein- und auszuschalten: So kann z. B. die Umgebungsbeleuchtung so gesteuert werden, dass sie nur dann erfolgt, wenn sich Personen im Bereich, der durch den Annäherungssensor 17 erfasst wird, befinden und dass sie eine gewisse Zeit, nachdem die Personen den erfassten Bereich verlassen haben, wieder ausgeschaltet wird. Die Beleuchtung des Schildes 10, 11 kann synchron zur Umgebungsbeleuchtung geschaltet werden oder nur ausgehend von den Signalen des Lichtsensors 14, also der herrschenden Lichtintensität.

Die Steuerungselektronik 15 ist als Modul ausgebildet, das bei Betriebsstörungen auf einfache Art und Weise als Ganzes ausgewechselt werden kann.

Die Erfindung beschränkt sich nicht auf die beschriebene Ausführungsform. Ist das zu beleuchtende Schild einseitig, bzw. ist in einem Rohrrahmen nur ein einzelnes Schild angebracht, so genügt eine einzelne Lichtquelle auf der Schild-Vorderseite zu dessen Beleuchtung, es ist also z.B. nur ein LED-Balken 10 vorhanden. Die Umgebungsbeleuchtung 12 kann fehlen, als Lichtquelle kann eine andere als eine LED-Leuchte dienen, z. B. eine Strom sparende Fluoreszenzleuchte, oder sie kann so ausgebildet sein, dass ihr Öffnungswinkel und die Richtung ihres Lichtkegels einstellbar sind. Wird keine Umgebungsbeleuchtung 12 gewünscht, kann die Vorrichtung balkenförmig, z. B. mittels nur zweier Aluminium-Halbprofile 18 ausgebildet sein, indem entweder der horizontale oder - vorzugsweise, wegen der Ausrichtung der Solarzellen - der vertikale Schenkel fehlt. Es können in diesem Fall zwar weniger Akkumulatorzellen 21 in der Vorrichtung untergebracht werden, doch durch das Fehlen der Umgebungsbeleuchtung ist auch der Energiebedarf in diesem Fall geringer.

Die Energieaufnahme kann anstelle von gebogenen Solarzellen 20 auch durch anders geformte, z. B. flache oder v-förmige, Solarzellen erfolgen. Diese sind mit Vorteil ausrichtbar angeordnet, z.B. mittels Kugelgelenk. Solarzellen können ebenfalls von der Vorrichtung abgesetzt sein, z.B. als ein zusätzliches Panel, welches an der Vorrichtung, am Schild bzw. an dessen Rahmen, am Standrohr oder Ausleger des Schildes oder auf einem eigenen Standrohr befestigt ist. Anstelle von Solarzellen kann auch ein anderes System zur Energiegewinnung (Batterien, Brennstoffzellen, Windgeneratoren) dienen.

Weiter kann die Beleuchtung des Schildes anstelle von LED-Beleuchtungsbalken auch durch auf das Schild aufgebrachte LED-Folie geschehen. Diese ist transparent, und von oben wird mittels Dioden weisses Licht in die Folie eingebracht, welches dann auf das darunter befindliche Schild trifft und dieses ausleuchtet.

Die Form der Vorrichtung kann der Schildform und der Befestigung des Schildes, bzw. eines es umgebenden Rahmens, angepasst werden. So kann ein bestehendes Schild statt mittels eines Standrohrs auch seitlich mittels horizontalen oder von oben mittels vertikalen Auslegern befestigt sein. Bei Schildformen, z. B. Rechtecken, deren horizontale Ausdehnung grösser als deren vertikale Ausdehnung ist, kann die Schiene 6 auch auf der Oberseite des Rahmens angebracht werden und die Nut 23 des horizontalen Schenkels 8 auf diese Schiene aufgefahren werden. Eine L-förmige Vorrichtung kann mit der beschriebenen Kombination von Nut 23 und Schiene 6 sogar an der Unterseite eines Schildes angebracht werden, welches z. B. seitlich an einem horizontalen Ausleger oder oben an einem vertikalen Ausleger befestigt ist, und dieses also von unten beleuchten. Natürlich muss in diesem Fall, wenn Solarzellen zur Energieaufnahme verwendet werden, deren Anordnung so modifiziert werden, dass wiederum die Aufnahme von Sonnenlicht möglich ist.

Das Gehäuse der Vorrichtung kann auch aus Kunststoff anstelle von Aluminium gefertigt werden.

Zusammenfassend ist festzustellen, dass die Erfindung durch einfache Nachrüstung eine netzunabhängige Beleuchtung von bestehenden Schildern ermöglicht.

## Patentansprüche

1. Vorrichtung mit einem Beleuchtungsmittel zum Beleuchten eines Schildes, wobei das Beleuchtungsmittel Teil einer am bestehenden Schild dauerhaft befestigbaren Baueinheit ist, **dadurch gekennzeichnet, dass** die Baueinheit eine netzunabhängige Stromversorgung umfasst und dass die Vorrichtung Mittel zur Befestigung der Baueinheit an einem das zu beleuchtende Schild umgebenden Rahmen (2) umfasst.

2. Vorrichtung nach Anspruch 1, **dadurch gekennzeichnet, dass** die netzunabhängige Stromversorgung in der Baueinheit enthalten ist.

3. Vorrichtung nach Anspruch 1 oder 2, **dadurch gekennzeichnet, dass** Solarzellen (20) und Akkumulatoren (21) vorgesehen sind, um die nötige elektrische Energie aufzunehmen und zu speichern.

4. Vorrichtung nach Anspruch 3, **dadurch gekennzeichnet, dass** die Solarzellen (20) verstellbar angeordnet sind.

5. Vorrichtung nach einem der Ansprüche 1-4, **dadurch gekennzeichnet, dass** eine oder mehrere LED-Leuchten (10, 11) oder eine auf das Schild aufgebrachte LED-Folie vorgesehen sind, um das Schild zu beleuchten.

6. Vorrichtung nach einem der Ansprüche 1-5, **dadurch gekennzeichnet, dass** die Baueinheit L-förmig ausgeführt ist.

7. Vorrichtung nach einem der Ansprüche 1-6, **dadurch gekennzeichnet, dass** sie Lichtsensoren (16) zur Steuerung der Beleuchtung des Schildes umfasst.

8. Vorrichtung nach einem der Ansprüche 1-7, **dadurch gekennzeichnet, dass** sie einen oder mehrere Annäherungssensoren (17) und/oder eine einstellbare Zeitschaltung zum Ein- und Ausschalten der Beleuchtung des Schildes umfasst.

9. Vorrichtung nach einem der Ansprüche 1-8, **dadurch gekennzeichnet, dass** sie neben der Beleuchtung des Schildes auch ein Beleuchtungsmittel zur Beleuchtung einer Umgebung, insbesondere Bereiche von Fusswegen und Strassen, umfasst, wobei Öffnungswinkel und gewünschte Richtung eines Lichtkegels der Umgebungsbeleuchtung (12) einstellbar sein können.

10. Vorrichtung nach Anspruch 9, **dadurch gekennzeichnet, dass** LED-Scheinwerfer (12) vorgesehen sind, um die Umgebung zu beleuchten.

11. Vorrichtung nach einem der Ansprüche 9 oder 10, **dadurch gekennzeichnet, dass** sie Lichtsensoren (16) zur Steuerung der Umgebungsbeleuchtung umfasst.

12. Vorrichtung nach einem der Ansprüche 9-11, **dadurch gekennzeichnet, dass** sie Annäherungssensoren (17) und/oder eine einstellbare Zeitschaltung zum Ein- und Ausschalten der Umgebungsbeleuchtung umfasst.

## Claims

1. Device having an illumination means for illuminating a sign, the illumination means being part of a structural unit which can be permanently fixed to the existing sign, **characterised in that** the structural unit comprises a network-independent electrical power supply and **in that** the device comprises means for fixing the structural unit to a frame (2) which surrounds the sign which is to be illuminated.

2. Device according to claim 1, **characterised in that** the network-independent electrical power supply is contained in the structural unit.

3. Device according to claim 1 or 2, **characterised in that** solar cells (20) and accumulators (21) are provided in order to receive and store the electrical energy required.

4. Device according to claim 3, **characterised in that** the solar cells (20) are arranged so as to be adjustable.

5. Device according to any one of claims 1 to 4, **characterised in that** there are provided one or more LED lights (10, 11) or an LED panel which is fitted to the sign in order to illuminate the sign.

6. Device according to any one of claims 1 to 5, **characterised in that** the structural unit is constructed in an L-shaped manner.

7. Device according to any one of claims 1 to 6, **characterised in that** it comprises light sensors (16) for controlling the illumination of the sign.

8. Device according to any one of claims 1 to 7, **characterised in that** it comprises one or more proximity sensors (17) and/or an adjustable time switch for switching the illumination of the sign on and off.

9. Device according to any one of claims 1 to 8, **characterised in that**, in addition to the illumination of the sign, it also comprises an illumination means for illuminating an environment, in particular sections of footpaths and roads, the opening angle and desired direction of a light cone of the environmental illumination (12) being able to be adjusted.

10. Device according to claim 9, **characterised in that** LED spotlights (12) are provided in order to illuminate the environment.

11. Device according to either claim 9 or 10, **characterised in that** it comprises light sensors (16) for controlling the environmental illumination.

12. Device according to any one of claims 9 to 11, **characterised in that** it comprises proximity sensors (17) and/or an adjustable time switch for switching the environmental illumination on and off.

## Revendications

1. Appareil avec dispositifs d'illumination pour l'éclairage d'un panneau, le dispositif d'illumination faisant partie d'une unité modulaire pouvant être fixée en permanence sur le panneau existant, **caractérisé en ce que** l'unité modulaire comprend une alimentation en courant électrique indépendante du secteur et **en ce que** l'appareil comprend des moyens pour fixer l'unité modulaire sur un châssis (2) entourant le panneau à éclairer.

2. Appareil selon la revendication 1, **caractérisé en ce que** l'alimentation en courant électrique indépendante du secteur est contenue dans l'unité modulaire.

3. Appareil selon la revendication 1 ou 2, **caractérisé en ce que** des cellules solaires (20) et des accumulateurs (21) sont prévus pour absorber et emmagasiner l'énergie électrique nécessaire.

4. Appareil selon la revendication 3, **caractérisé en ce que** les cellules solaires (20) sont agencées de façon à pouvoir être déplacées.

5. Appareil selon l'une des revendications 1 à 4, **caractérisé en ce que** une ou plusieurs lampes DEL (10, 11), ou une feuille DEL appliquée sur le panneau, sont prévues pour éclairer le panneau.

6. Appareil selon l'une des revendications 1 à 5, **caractérisé en ce que** l'unité modulaire est réalisée en forme de L.

7. Appareil selon l'une des revendications 1 à 6, **caractérisé en ce qu'**il comprend des capteurs de lumière (16) pour commander l'éclairage du panneau.

8. Appareil selon l'une des revendications 1 à 7, **caractérisé en ce qu'**il comprend un ou plusieurs capteurs de proximité (17) et/ou un circuit de synchronisation réglable pour mettre en marche et arrêter l'éclairage du panneau.

9. Appareil selon l'une des revendications 1 à 8, **caractérisé en ce qu'**il comprend également, outre l'éclairage du panneau, un dispositif d'éclairage pour éclairer un environnement, en particulier des secteurs de chemins et de rues, l'angle d'ouverture et la direction souhaitée d'un cône lumineux de l'éclairage de l'environnement (12) étant réglables.

10. Appareil selon la revendication 9, **caractérisé en ce que** des projecteurs DEL (12) sont prévus, pour éclairer l'environnement.

11. Appareil selon l'une des revendications 9 à 10, **caractérisé en ce qu'**il comprend des capteurs de lumière (16) pour commander l'éclairage de l'environnement.

12. Appareil selon l'une des revendications 9 à 11, **caractérisé en ce qu'**il comprend des capteurs de proximité (17) et/ou un circuit de synchronisation réglable pour mettre en marche et arrêter l'éclairage de l'environnement.
